# EUROPEAN PATENT APPLICATION

(11) **EP 4 144 981 A1**
(43) Date of publication of application: **08.03.2023**
(21) Application number: 21797304.9
(22) Date of filing: 20.04.2021
(51) Int. Cl.: F02M 21/02, B60K 15/04, B60K 15/01

(54) **FUEL PROCESSING UNIT AND FUEL STORAGE AND SUPPLY SYSTEM HAVING SAME**

(30) Priority: 28.04.2020 CN 202010349122
(71) Applicant: FTXT Energy Technology Co., Ltd., Shanghai 201804 (CN)
(72) Inventor: ZIEGER, Andreas, Shanghai 201804 (CN)
(74) Representative: Habermann, Hruschka & Schnabel
(86) International application number: PCT/CN2021/088477
(87) International publication number: WO 2021/218712

(57) **Abstract**

A fuel processing unit (1) includes a housing (11). A fuel supply channel (12) is defined in the housing (11). A feeding port (111) in communication with the fuel supply channel (12), a discharge port (113), and at least one fuel storage port (112) are defined in the housing (11). The at least one fuel storage port (112) is disposed between the feeding port (111) and the discharge port (113). A one-way valve (121) and at least one pressure regulator (122) are provided on fuel supply channel (12). The at least one pressure regulator (122) is disposed between the at least one fuel storage port (112) and the discharge port (113). The fuel processing unit (1) can lower costs, ease a mounting difficulty level, and reduce a risk of a fuel gas leakage. A fuel storage and supply system having the fuel processing unit (1) is also provided.

## Description

### CROSS-REFERENCE TO RELATED APPLICATIONS

This application claims priority to Chinese Patent Application No. 202010349122.7, entitled "FUEL PROCESSING UNIT AND FUEL STORAGE AND SUPPLY SYSTEM HAVING SAME" and filed by FTXT ENERGY TECHNOLOGY CO., LTD. on April 28, 2020.

### FIELD

The present disclosure relates to the field of fuel storage and supply, and more particularly, to a fuel processing unit and a fuel storage and supply system having the same, for example, a processing unit for a gaseous fuel such as hydrogen or methane, and a fuel storage and supply system having the same.

### BACKGROUND

At present, a fuel storage and supply system is equipped with a large number of controllers, such as a pressure regulator, a one-way valve, a high-pressure sensor, a low-pressure sensor, etc. These controllers are used to control a flow direction and a pressure of a fuel in the fuel storage and supply system. When the fuel storage and supply system is applied in a hydrogen vehicle or a fuel cell vehicle, a plurality of fuel storage tanks is usually mounted to improve a range of the vehicle. Correspondingly, a number of controllers need to be disposed within each fuel storage tank. Since these controllers are usually separate members, a large number of parts need to be assembled for the fuel storage and supply system, which is unfavorable to mounting. In addition, pipelines for connecting these controllers are complicated, resulting in a risk of a fuel gas leakage.

### SUMMARY

The present disclosure aims to solve at least one of the above technical problems in the related art to some extent. To this end, the present disclosure proposes a fuel processing unit, which can lower costs, ease a mounting difficulty level, and reduce a risk of a fuel gas leakage.

The present disclosure further proposes a fuel storage and supply system having the fuel processing unit as described above.

According to embodiments of the present disclosure, a fuel processing unit includes a housing. A fuel supply channel is defined in the housing. A feeding port in communication with the fuel supply channel, a discharge port, and at least one fuel storage port are defined in the housing. The at least one fuel storage port is disposed between the feeding port and the discharge port. A one-way valve and at least one pressure regulator that are provided on the fuel supply channel. The at least one pressure regulator is disposed between the at least one fuel storage port and the discharge port.

With the fuel processing unit according to the embodiments of the present disclosure, storage and supply of a fuel can be controlled. A high integration level of the fuel processing unit can significantly reduce the number of parts in the fuel storage and supply system, which facilitates a reduction in the number of pipelines for connecting these parts to each other, thereby lowering costs, easing mounting difficulty level, and reducing risk of the fuel gas leakage.

According to some embodiments of the present disclosure, a safety valve is further provided on the fuel supply channel. The safety valve is disposed between the at least one pressure regulator and the discharge port.

According to some embodiments of the present disclosure, a high-pressure sensor is further provided on the fuel supply channel. The high-pressure sensor is disposed between the feeding port and an inlet of the at least one pressure regulator.

According to some embodiments of the present disclosure, a low-pressure sensor is further provided on the fuel supply channel. The low-pressure sensor is disposed between the at least one pressure regulator and the discharge port.

According to some embodiments of the present disclosure, the at least one pressure regulator includes a plurality of pressure regulators or one multi-stage pressure regulator.

According to embodiments in another aspect of the present disclosure, a fuel storage and supply system includes: the fuel processing unit as described above; a fuel source connected to the feeding port by a feeding line; at least one fuel storage tank connected correspondingly to the at least one fuel storage port by a storage line; and a fuel destination connected to the discharge port by a fuel discharge line.

The fuel storage and supply system have the same advantages as those of the above-mentioned fuel processing unit over the related art, and details thereof will be omitted herein.

According to some embodiments of the present disclosure, the at least one fuel storage port includes a plurality of fuel storage ports, and the at least one fuel storage tank includes a plurality of fuel storage tanks. Each of the plurality of fuel storage ports is connected to a corresponding one of the plurality of fuel storage tanks by a corresponding storage line.

Further, a filter is provided between the fuel source and the one-way valve on the feeding line or in the fuel supply channel.

Further, the fuel storage and supply system further includes an access opening defined on the discharge line or in the fuel supply channel.

Further, a solenoid valve is provided at the fuel destination. Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the description of embodiments taken in conjunction with the accompanying drawings, in which:
FIG. 1 is a schematic view of a fuel storage and supply system;
FIG. 2 is a schematic structural view of a fuel processing unit;
FIG. 3 is a schematic view of a fuel processing unit; and
FIG. 4 is a schematic structural view of a housing.

### DESCRIPTION OF EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In addition, in the description of the present disclosure, "plurality of" means two or more than two, unless specified otherwise.

In the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings or can communicate with each other, and also can be direct and via media indirect mountings, connections, and couplings, and further can be inner mountings, connections and couplings of two components or interaction relations between two components, which can be understood by those of ordinary skill in the art according to the detail embodiment of the present disclosure.

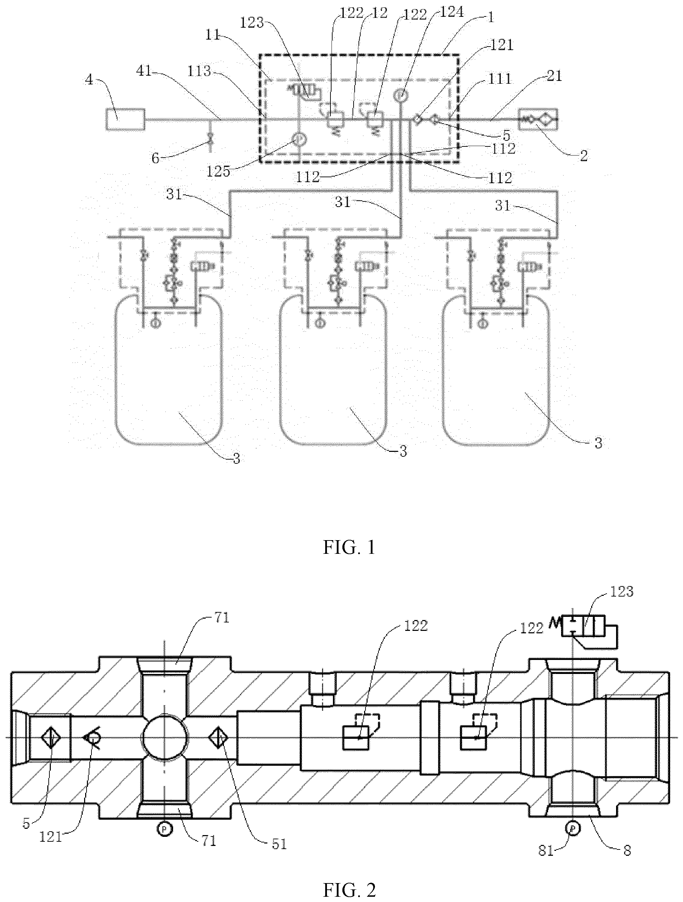

A fuel processing unit 1 according to an embodiment of the present disclosure will be described in detail below with reference to FIG. 1.

As illustrated in FIG. 1, the fuel processing unit 1 is applied in a fuel storage and supply system, and is capable of controlling a flow direction and a pressure of a fuel in the fuel storage and supply system. The fuel processing unit 1 includes a housing 11. Functional components of the fuel processing unit 1 are integrated in or on the housing 11. Specifically, the housing 11 has a fuel supply channel 12, a feeding port 111 in communication with the fuel supply channel 12, a discharge port 113, and at least one fuel storage port 112 disposed between the feeding port 111 and the discharge port 113. The fuel may flow through the feeding port 111 to the fuel storage port 112 or the discharge port 113 via the fuel supply channel 12.

The fuel supply channel 12 is provided with a one-way valve 121 and at least one pressure regulator 122. The one-way valve 121 is disposed between the feeding port 111 and the at least one fuel storage port 112 to prevent the fuel that has passed through the one-way valve 121 from flowing back into the feeding port 111. That is, after entering the fuel supply channel 12 from the at least one fuel storage port 112, the fuel may only flow towards the discharge port 113, rather than flowing towards the feeding port 111. The pressure regulator 122 is disposed between the fuel storage port 112 and the discharge port 113 to regulate a pressure of a fuel gas flowing out of the discharge port 113.

With the fuel processing unit 1 according to the embodiment of the present disclosure, storage and supply of the fuel can be controlled. A high integration level of the fuel processing unit 1 can significantly reduce the number of parts in the fuel storage and supply system, which facilitates a reduction in the number of pipelines for connecting these parts to each other, thereby lowering the costs, easing the mounting difficulty level, and reducing the risk of the fuel gas leakage.

As illustrated in FIG. 1, the fuel supply channel 12 is further provided with a safety valve 123. The safety valve 123 is disposed between the pressure regulator 122 and the discharge port 113. The safety valve 123 may be a relief valve to ensure that a pressure of a gas adjusted by the regulator and then flowing towards the discharge port 113 is a safe value. In this way, an excessive pressure can be avoided to ensure safety performance of the fuel processing unit 1.

Referring to FIG. 1, the fuel supply channel 12 is further provided with a high-pressure sensor 124. The high-pressure sensor 124 is disposed between the feeding port 111 and the pressure regulator 122, and is configured to monitor a gas pressure at an inlet of the at least one pressure regulator 122, such as a pressure at which the fuel gas flows from the feeding port 111 to the inlet of the pressure regulator 122, or a pressure at which the fuel gas flows from the fuel storage port 112 to the inlet of the pressure regulator 122.

Referring to FIG. 1, the fuel supply channel 12 is further provided with a low-pressure sensor 125. The low-pressure sensor 125 is disposed between the pressure regulator 122 and the discharge port 113, and is configured to monitor a pressure value of the gas adjusted by the at least one pressure regulator 122 and then flowing towards the discharge port 113.

In some embodiments of the present disclosure, the at least one pressure regulator 122 includes a plurality of pressure regulators, or one multi-stage pressure regulator 122 for regulating the pressure of the fuel gas in multiple times stage by stage to ensure safety of regulating the pressure of the fuel gas. In the embodiment illustrated in FIG. 1, two pressure regulators 122 are provided.

Referring to FIG. 1, according to an embodiment in another aspect of the present disclosure, the fuel storage and supply system includes the fuel processing unit 1 as described above, a fuel source 2, at least one fuel storage tank 3, and a fuel destination 4.

The fuel source 2 is connected to the feeding port 111 by a feeding line 21 and configured to deliver the fuel to the feeding port 111 by the feeding line 21. The fuel storage tank 3 is connected to the fuel storage port 112 by a storage line 31. The fuel storage port 112 is configured to deliver the fuel outputted by the fuel source 2 to the fuel storage tank 3 by the storage line 31 to store the fuel. The fuel destination 4 is connected to the discharge port 113 by a fuel discharge line 41. The fuel stored in the fuel storage tank 3 is delivered to the fuel destination 4 by the storage line 31, the fuel storage port 112, the pressure regulator 122, and the discharge port 113 sequentially.

Some of the fuel from the fuel source 2 may pass through fuel discharge line 41 to the fuel destination 4, and the remaining of the fuel may be stored in the fuel storage tank 3 after passing through the storage line 31. When no fuel from the fuel source 2 is delivered to the feeding port 111, the fuel in the fuel storage tank 3 may pass through the storage line 31 and the fuel discharge line 41 to the fuel destination 4 for the use at the fuel destination 4. In this case, the fuel storage and supply system may be integrated in a vehicle.

Referring to FIG. 1, the at least one fuel storage port 112 includes a plurality of fuel storage ports, and the at least one fuel storage tank 3 includes a plurality of fuel storage tanks. Each of the plurality of fuel storage ports 112 is connected to corresponding one of the plurality of fuel storage tanks 3 by a corresponding storage line 31 to store the fuel by the plurality of fuel storage tanks 3, thereby facilitating an increase in a fuel storage capacity of the fuel storage and supply system.

Referring to FIG. 1, a filter 5 is disposed between the fuel source 2 and the one-way valve 121 on the feeding line 21 or in the fuel supply channel 12. The filter 5 may be configured to filter the fuel gas delivered to the fuel storage tank 3 by the fuel source 2.

Referring to FIG. 1, the fuel storage and supply system further includes an access opening 6 disposed on the discharge line 41 or in the fuel supply channel 12. The access opening 6 allows routine check and breakdown maintenance of the fuel storage and supply system.

In some embodiments of the present disclosure, a solenoid valve is disposed at the fuel destination 4 as a switch to control delivering of the fuel to the fuel destination 4.

Referring to FIG. 2, the fuel processing unit 1 includes the filter 5, the one-way valve 121, and a high-pressure diverter 7. The filter 5 is disposed upstream of the high-pressure diverter 7. The high-pressure diverter includes a high-pressure sensor port, a high-pressure port 71, and a pressure-reduction filter 51 corresponding to the pressure regulator 122. The pressure regulator 122 is disposed downstream of the pressure-reduction filter 51, and the pressure-reduction filter 51 is configured to filter impurities in the gas. The filter 5 has a filtration accuracy of 100 µm, and preferably the pressure-reduction filter 51 has a filtration accuracy of 10 µm.

Referring to FIG. 2, the high-pressure diverter 7 includes three high-pressure ports 71 that correspond to the high-pressure sensor port, a port of the filter 5 corresponding to the pressure regulator 122, and a port of the fuel storage tank 3, respectively. The three high-pressure ports 71 are arranged in parallel.

Here, the pressure regulator 122 may be configured for pressure reduction. As illustrated in FIG. 2, the fuel processing unit 1 includes two pressure regulators 122 that may form a two-stage pressure-reduction structure. The upstream pressure regulator 122 may have an unbalanced pressure-reduction structure for reducing a high pressure to a low pressure. The downstream pressure regulator 122 may have a balanced pressure-reduction structure for re-reducing the low pressure outputted by the first-stage pressure regulator and stabilizing the re-reduced low pressure to an operating pressure, thereby enhancing stability of an output pressure.

Referring to FIG. 2, the safety valve 123 is disposed downstream of the two-stage pressure-reduction structure. The safety valve 123 may be a relief valve to ensure that the pressure of the gas adjusted by the pressure regulator 122 and then flowing towards the discharge port 113 is a safe value. In this way, an excessive pressure can be avoided to ensure the safety performance of the fuel processing unit 1.

A middle-pressure sensor port 8 is disposed at an outlet end of the safety valve 123, and is configured for mounting of a middle-pressure sensor 81. The middle-pressure sensor 81 is configured to detect a pressure value downstream of the safety valve 123 in real time.

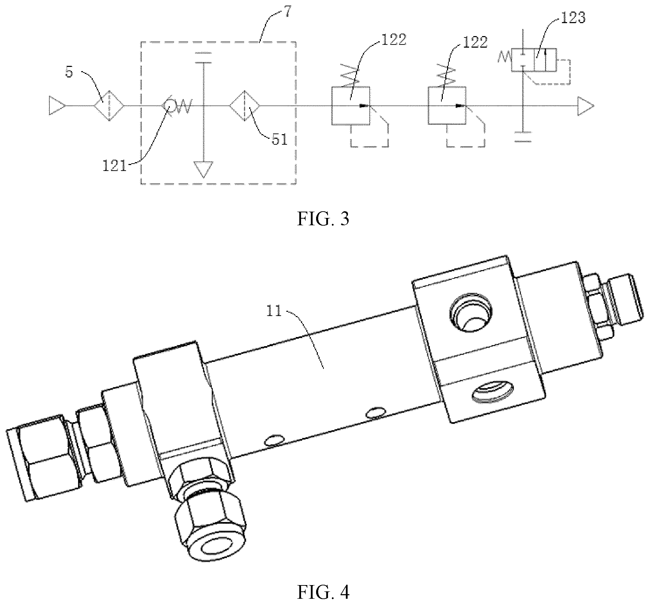

Referring to FIG. 3, the safety valve 123 is designed into a one-piece axial structure to realize a higher integration level, a smaller size, and a lighter weight of a product. The safety valve 123 may be fixed on the housing 11 by a pipe clamp or a fixation bracket, and may also provide a support to the housing 11.

According to an embodiment in yet another aspect of the present disclosure, a vehicle includes the fuel storage and supply system according to the above embodiments.

In some embodiments of the present disclosure, the fuel is hydrogen or methane. The fuel storage and supply system may be applied in a hydrogen vehicle or a fuel cell vehicle.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", "circumferential", etc., is based on the orientation or position relationship shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation to the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, unless otherwise specifically defined.

In the present disclosure, unless otherwise clearly specified and limited, terms such as "installed", "connected", "coupled", "fixed" and the like should be understood in a broad sense. For example, it may be a fixed connection or a detachable connection or connection as one piece; mechanical connection or electrical connection or communication; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature being "on" or "under" the second feature may mean that the first feature is in direct contact with the second feature, or the first and second features are in indirect contact through an intermediate. Moreover, the first feature being "above" the second feature may mean that the first feature is directly above or obliquely above the second feature, or simply mean that the level of the first feature is higher than that of the second feature. The first feature being "below" the second feature may mean that the first feature is directly below or obliquely below the second feature, or simply mean that the level of the first feature is smaller than that of the second feature.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

Although the embodiments of the present disclosure have been shown and described above, it should be understood that the above-mentioned embodiments are exemplary and should not be construed as limiting the present disclosure. For those of ordinary skill in the art, changes, alternatives, and modifications can be made to the above-mentioned embodiments without departing from the scope of the present disclosure.

## Claims

1. A fuel processing unit, comprising a housing, wherein:
a fuel supply channel is defined in the housing;
a feeding port in communication with the fuel supply channel, a discharge port, and at least one fuel storage port are defined on the housing;
the at least one fuel storage port is disposed between the feeding port and the discharge port; and
one-way valve and at least one pressure regulator are provided on the fuel supply channel, the at least one pressure regulator being disposed between the at least one fuel storage port and the discharge port.

2. The fuel processing unit according to claim 1, wherein a safety valve is further provided on the fuel supply channel, the safety valve being disposed between the at least one pressure regulator and the discharge port.

3. The fuel processing unit according to claim 1, wherein a high-pressure sensor is further provided on the fuel supply channel, the high-pressure sensor being disposed between the feeding port and an inlet of the at least one pressure regulator and configured to detect a pressure at the inlet of the at least one pressure regulator.

4. The fuel processing unit according to claim 1, wherein a low-pressure sensor is further provided on the fuel supply channel, the low-pressure sensor being disposed between the at least one pressure regulator and the discharge port.

5. The fuel processing unit according to claim 1, wherein the at least one pressure regulator comprises a plurality of pressure regulators, or the at least one pressure regulator is one multi-stage pressure regulator.

6. A fuel storage and supply system, comprising:
the fuel processing unit according to any one of claims 1 to 5;
a fuel source connected to the feeding port by a feeding line;
at least one fuel storage tank connected correspondingly to the at least one fuel storage port by a storage line; and
a fuel destination connected to the discharge port by a fuel discharge line.

7. The fuel storage and supply system according to claim 6, wherein:
the at least one fuel storage port comprises a plurality of fuel storage ports;
the at least one fuel storage tank comprises a plurality of fuel storage tanks; and
each of the plurality of fuel storage ports is connected to a corresponding one of the plurality of fuel storage tanks by a corresponding storage line.

8. The fuel storage and supply system according to claim 6, wherein a filter is provided between the fuel source and the one-way valve on the feeding line or in the fuel supply channel.

9. The fuel storage and supply system according to claim 6, further comprising an access opening defined on the discharge line or in the fuel supply channel.

10. The fuel storage and supply system according to claim 6, wherein a solenoid valve is provided at the fuel destination.
